# EUROPEAN PATENT SPECIFICATION

(11) **EP 1 776 026 B1**
(45) Date of publication and mention of the grant of the patent: **09.01.2008**
(21) Application number: 05804651.7
(22) Date of filing: 03.06.2005
(51) Int. Cl.: A47J 31/40

(54) **PERCOLATOR MACHINE FOR MAKING A BEVERAGE**
KAFFEEMASCHINE ZUR GETRÄNKEZUBEREITUNG
PERCOLATEUR POUR FAIRE UNE BOISSON

(30) Priority: 04.06.2004 IT TO20040374
(43) Date of publication of application: 25.04.2007
(73) Proprietor: SGL Italia S.r.l. con unico socio, 10156 Torino (TO) (IT)
(72) Inventor: CORTESE, Virginio, I-10100 Torino (IT)
(74) Representative: Jorio, Paolo
(86) International application number: PCT/EP2005/052558
(87) International publication number: WO 2006/013124

(56) References cited:
- EP-A- 1 195 121
- EP-A- 1 219 217
- FR-A- 2 769 483
- US-A- 4 389 925
- US-A- 5 649 472
- US-A- 5 755 149

## Description

### TECHNICAL FIELD

The present invention relates to a percolator machine for making a beverage from powdered material housed inside a container.

More specifically, the present invention relates to a percolator machine for making a beverage from powdered material housed inside a container, the machine having a horizontal first axis, and comprising a pressurized hot water dispenser unit and a thrust unit aligned with each other along the first axis, and seating means interposed between the dispenser unit and the thrust unit to define a first seat coaxial with the first axis and for receiving a said container; the dispenser unit comprising a pressurized hot water sprinkler; the thrust unit comprising a fixed member, and a movable output member facing the sprinkler and movable along the first axis to grip in fluidtight manner against the sprinkler a container housed, in use, inside said first seat; and the seating means comprising a gripper device, in turn comprising two jaws mounted to oscillate, about respective second axes located above the first axis and parallel to each other and to the first axis, to and from a closed position, in which the two jaws define said first seat, and a second seat for a further container; said second seat being open at the top, and being located between said second axes and above the first seat.

### BACKGROUND ART

A percolator machine of this type is disclosed in US-A-4,389,925.

Though the machine according to the present invention may be used to percolate any type of beverage by feeding pressurized hot water through a relative powdered or substantially dry granulated food substance housed inside a container, specific reference is made in the following description, purely by way of example, to a machine for making a coffee beverage using a container containing a respective measure of ground coffee.

### DISCLOSURE OF INVENTION

It is an object of the present invention to provide a machine of the type described above, in which the containers can be loaded and the used containers unloaded cheaply and easily using a small number of moving parts.

According to the present invention, there is provided a percolator machine for making a beverage from powdered material housed inside a container, as claimed in Claim 1 and, preferably, in any one of the following Claims depending directly or indirectly on Claim 1.

### BRIEF DESCRIPTION OF THE DRAWINGS

A number of non-limiting embodiments of the invention will be described by way of example with reference to the accompanying drawings, in which:
Figure 1 shows a partly sectioned side view, with parts removed for clarity, of a first preferred embodiment of the machine according to the present invention;
Figure 2 shows a partly sectioned plan view of the Figure 1 machine;
Figures 3 to 5 show front views of a detail in Figure 1 and 2 in respective different operating positions;
Figure 6 shows a partly sectioned side view, with parts removed for clarity, of a second preferred embodiment of the machine according to the present invention;
Figure 7 shows a partly sectioned plan view of the Figure 6 machine;
Figures 8 to 10 show larger-scale plan views of a variation of a detail in Figure 1 and 6 in respective different operating positions;
Figure 11 shows a front view of a variation of the Figure 3-5 detail connected to the Figure 8-10 variation in the Figure 10 operating position.

### BEST MODE FOR CARRYING OUT THE INVENTION

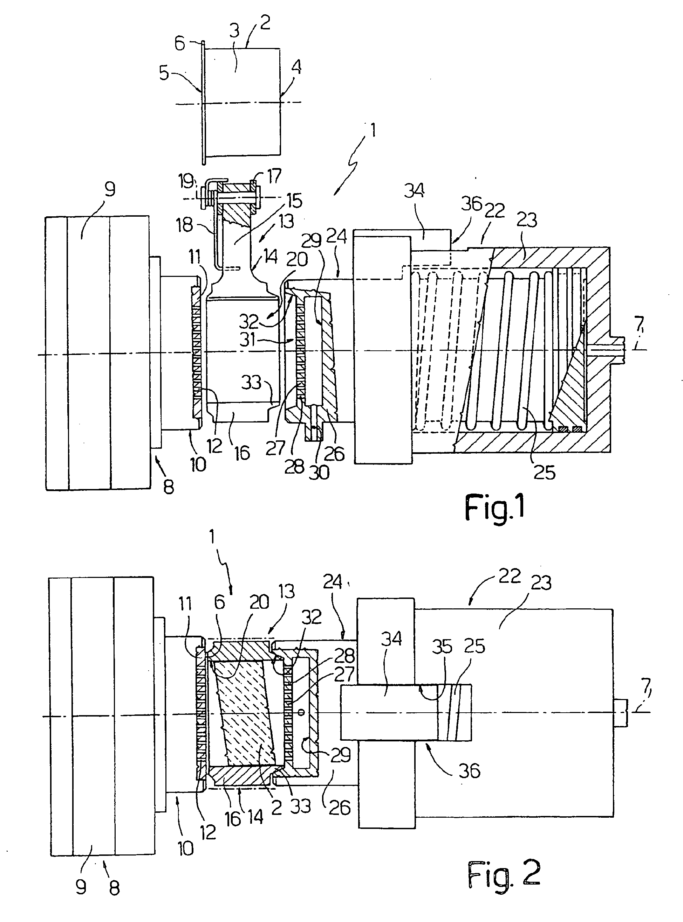

Number 1 in Figures 1 and 2 indicates as a whole a percolator machine for making a coffee beverage from ground coffee housed in a container 2 defined by a rigid capsule, which is bounded by a substantially cylindrical lateral wall 3, is closed at the ends by two perforated walls 4 and 5, and has an annular flange 6 substantially coplanar with wall 5 and projecting outwards from lateral wall 3.

As shown in Figure 1, machine 1 extends along a horizontal axis 7, and comprises a pressurized hot water dispenser unit 8, in turn comprising a boiler 9 supplied with pressurized water by a known pump (not shown), and a sprinkler 10 connected integrally to boiler 9, coaxially with axis 7, and supplied with pressurized hot water from boiler 9 via a known one-way valve (not shown) calibrated to open, as explained later on, when the pressure upstream from the valve reaches a given value.

As shown in Figures 1 and 2, sprinkler 10 is substantially cup-shaped, is positioned with its concavity facing boiler 9, and is defined by a substantially cylindrical lateral wall, and by an end wall 11 perpendicular to axis 7 and having a number of through pressurized hot water outlet holes 12 also parallel to axis 7.

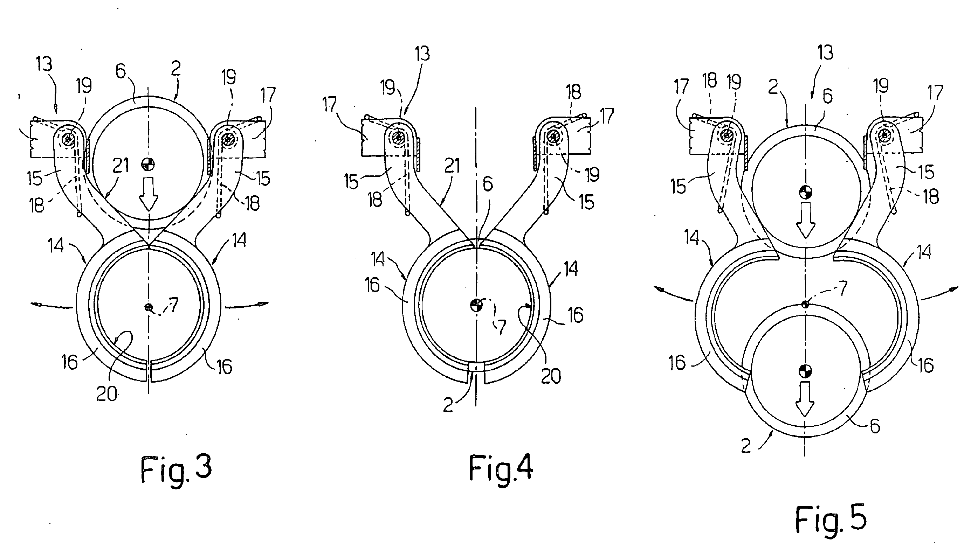

In addition to unit 8, machine 1 also comprises, facing end wall 11, a supporting unit for receiving and releasably retaining a container 2, and which is defined by a gripper device 13 - shown in detail in Figures 3 to 5 - comprising two jaws 14 located symmetrically on opposite sides of axis 7, and each of which comprises a curved top portion 15 with its concavity facing the other top portion 15, and a semicircular bottom portion 16 with its concavity facing the other bottom portion 16. Each top portion 15 is hinged at its top end to a respective fixed bracket 17 to oscillate, with respect to bracket 17, in opposition to a respective spring 18, and about a relative axis 19 parallel to axis 7, from a normal closed position closing gripper device 13 (Figure 3) to an open position (Figure 5) opening gripper device 13.

In said closed position, the two bottom portions 16 define a substantially cylindrical seat 20 coaxial with axis 7 and for partly housing a container 2 positioned with walls 4 and 5 perpendicular to axis 7; and top portions 15 define a funnel-shaped seat 21 (Figure 3) open at the top and for at least partly housing a container 2 positioned with its longitudinal axis parallel to axis 7.

In actual use, seat 21 enables a user to insert a container 2 downwards into seat 20. That is, seat 21 provides for centring container 2 relatively accurately with respect to jaws 14 and over seat 20. If, at this point, downward force is applied to container 2 manually or using any push device, the funnel shape of seat 21 converts this force into two parting forces directed crosswise to axes 19, and which part jaws 14 to form, between seat 21 and seat 20, a connecting channel enabling container 2 to pass from seat 21 to seat 20. If seat 20 is already engaged by a container 2 - in this case, a used container 2 - the used container 2 drops down, and the new container 2 is simultaneously inserted inside seat 20 when jaws 14 open.

As shown in Figure 1, gripper device 13 and end wall 11 of sprinkler 10 are separated by a distance approximately equal to but no smaller than the thickness of flange 6; and the width, measured parallel to axis 7, of bottom portions 16 of jaws 14 is approximately equal to but no greater than the height of lateral wall 3 of container 2. Consequently, when container 2 is housed inside seat 20 (Figures 2 and 4), walls 5 and 4 project frontwards and rearwards respectively of bottom portions 16, and flange 6 is substantially tangent to end wall 11 of sprinkler 10.

Machine 1 also comprises a hydraulic cylinder 22, which is coaxial with axis 7, is located on the opposite side of gripper device 13 to unit 8, and receives pressurized hot water (in known manner) along a feed conduit (not shown) connected to an outlet of boiler 9 and parallel to a feed conduit (not shown) supplying pressurized hot water to sprinkler 10.

Hydraulic cylinder 22 comprises a fixed tubular body 23 coaxial with axis 7; and a piston 24 coaxial with axis 7 and mounted, with the interposition of a return spring 25, to slide axially along tubular body 23 between a withdrawn position (Figure 1), in which an end portion 26 of piston 24 projects axially from tubular body 23 towards gripper device 13, and a forward operating position (Figure 2), in which piston 24 axially compresses a container 2, housed inside seat 20, against sprinkler 10 on one side, so that flange 6 engages end wall 11 of sprinkler 10 in fluidtight manner, and against end portion 26 on the other side.

On the side facing gripper device 13, end portion 26 comprises a wall 27, which has through holes 28, defines, inside end portion 26, a chamber 29 communicating with the outside via an outflow conduit 30, and is positioned contacting the end of lateral wall 3 adjacent to wall 4 in fluidtight manner when piston 24 is moved into the forward operating position.

In the Figure 2 example, wall 27 defines the end wall of a cavity 31 (Figure 1) having a truncated-cone-shaped lateral surface 32 which, when piston 24 is in the forward operating position described above, cooperates with corresponding truncated-cone-shaped end portions 33 of jaws 14 to prevent jaws 14 from parting in the event of outward deformation of lateral wall 3 of container 2 when pressurized hot water is fed into container 2 during percolation.

In a variation not shown, end portion 26 of piston 24 has no cavity 31, and jaws 14 have no respective truncated-cone-shaped end portions 33.

Piston 24 is fitted integrally on top with a substantially parallelepiped-shaped shoe 34 engaged and sliding axially inside a slot 35 formed on tubular body 23 and which, together with shoe 34, forms part of a guide and angular lock device 36 for guiding and angularly locking piston 24 with respect to tubular body 23.

Operation of machine 1 is obvious from the foregoing description. It should be pointed out, however, that, since flange 6 of container 2 housed inside seat 20 is positioned from the outset substantially contacting end wall 11 of sprinkler 10, fluidtight connection of container 2 to sprinkler 10 by piston 24 involves very little axial displacement of gripper device 13. In other words, gripper device 13 remains substantially stationary, simply flexing elastically towards sprinkler 10, during displacement of piston 24.

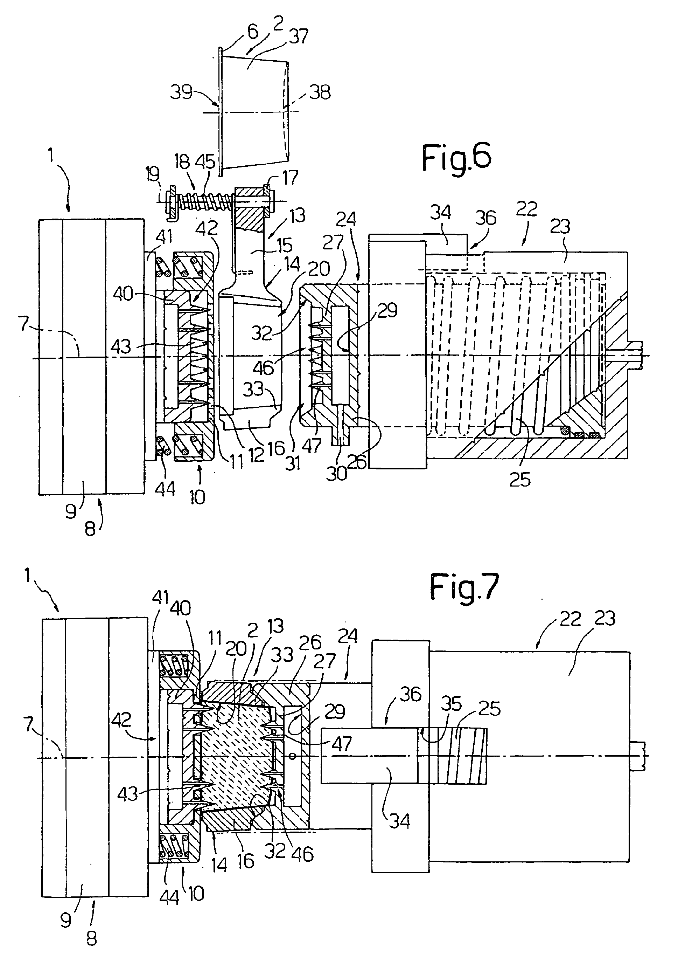

Machine 1 in Figures 6 and 7 may be used to make a beverage from a container 2 defined by a sealed capsule, i.e. a capsule made of thermoplastic material, bounded laterally by a truncated-cone-shaped wall 37, and closed at its minor base by a concave end wall 38, and at its major base by a sealing wall 39, normally of foil, which is sealed to flange 6 to seal the capsule in fluidtight manner.

In this case, as opposed to being cylindrical, seat 20 is truncated-cone-shaped like the relative sealed capsule, and tapers towards piston 24; and, as opposed to being fixed with respect to boiler 9, sprinkler 10 is fitted in axially sliding manner to a cylindrical appendix 40 coaxial with axis 7 and projecting from a plate 41 coaxial with axis 7 and fitted integrally to boiler 9. Appendix 40 and plate 41 form part of a piercing device 42, which also comprises a number of needles 43 integral with appendix 40, extending from appendix 40 towards sprinkler 10 in a direction parallel to axis 7, and aligned with holes 12 in sprinkler 10. Needles 43 provide, in use, for piercing sealing wall 39 to allow pressurized hot water to flow into container 2.

Sprinkler 10 is movable axially on appendix 40, in opposition to a number of springs 44 compressed between sprinkler 10 and plate 41, between a normal extracted position (Figure 6), in which needles 43 are housed within end wall 11, and a withdrawn position, in which end wall 11 contacts a front wall of appendix 40, and needles 43 project partly outwards of end wall 11 towards gripper device 13.

In the Figure 6 and 7 example, the top ends of top portions 15 of jaws 14 are connected to respective brackets 17 so as to rotate and also slide axially, in a direction parallel to axis 7, along respective axes 19 in opposition to respective springs 18, each of which comprises a helical portion 45 coiled about respective axis 19 to keep respective jaw 14 in a withdrawn position towards piston 24.

Gripper device 13 is thus movable between a normal withdrawn position towards piston 24 (Figure 6), and a forward operating position (Figure 7) in which gripper device 13 contacts sprinkler 10 in the withdrawn position.

Machine 1 also comprises a further piercing device 46 connected to piston 24 and comprising a number of needles 47, which project from wall 27 of end portion 26 in a direction parallel to axis 7, and, in use, pierce end wall 38 of container 2, when end wall 38 is deformed outwards by the pressurized hot water flowing into container 2.

In actual use, when piston 24, as it moves into the forward operating position, engages gripper device 13, container 2 is inserted partly inside cavity 31, and needles 47 occupy the gap between wall 27 and concave end wall 38 of container 2. Further forward movement of piston 24 moves gripper device 13 from the withdrawn to the forward operating position, and simultaneously moves sprinkler 10 from the extracted to the withdrawn position. During the latter movement, needles 43 pierce sealing wall 39 and penetrate container 2; pressurized hot water is then fed into container 2 so that end wall 38 swells outwards and is pierced by needles 47; and the percolated beverage flows out through needles 47, holes 28, chamber 29, and outflow conduit 30.

In connection with the above, it should be pointed out that, as container 2 is pushed towards sprinkler 10, truncated-cone-shaped lateral surface 32 of cavity 31 of piston 24 engages truncated-cone-shaped portions 33 of jaws 14 to lock jaws 14 in position and so prevent the truncated-cone-shaped wall 37 of container 2 from being deformed outwards and possibly torn by the relatively high pressure produced inside container 2 by the pressurized hot water before end wall 38 is pierced.

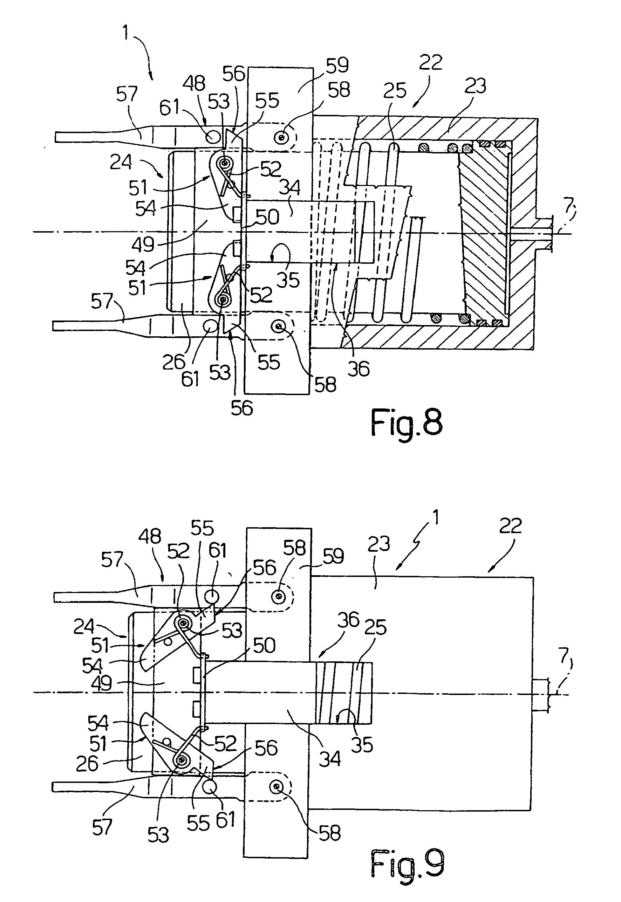

In the variation shown in Figures 8, 9, 10 and 11, machine 1 in both the embodiments described above may be equipped with an automatic unloading device 48 for unloading the used container 2 from gripper device 13 as piston 24 moves back from the forward operating position to the withdrawn position.

Unloading device 48 comprises a flat, substantially rectangular, horizontal plate 49 located on top of end portion 26 of piston 24, and having a right-angle appendix 50 fitted rigidly to shoe 34. Two rocker arms 51 are hinged to the ends of plate 49, are oriented in a direction substantially crosswise to axis 7, are arranged specularly with respect to a vertical plane through axis 7, and rotate, in opposite directions and in opposition to respective return springs 52, about respective substantially vertical pins 53 extending upwards from plate 49. Each rocker arm 51 comprises a first arm 54 extending from relative pin 53 towards the other arm 54 and normally maintained by relative spring 52 contacting appendix 50; and a second arm defined by a tooth 55, which extends outwards from plate 49 in a direction substantially crosswise to axis 7, and is bounded at its free end by a surface 56 sloping towards axis 7 and hydraulic cylinder 22.

Unloading device 48 also comprises two levers 57 located symmetrically on opposite sides of piston 24 and oriented in a direction substantially parallel to axis 7. Each lever 57 is hinged at one end by a respective vertical pin 58 to a cross member 59 integral with tubular body 23 of hydraulic cylinder 22, and, at the opposite end, engages in transversely sliding manner a respective L-shaped bracket 60 fitted rigidly to top portion 15 of a respective jaw 14 and projecting outwards from top portion 15 and crosswise to axis 7. Each lever 57 is fitted integrally with a vertical pin 61 located close to cross member 59, and which is engaged by relative tooth 55.

When piston 24 is in the withdrawn position (Figure 8), each arm 54 is positioned contacting appendix 50, and each tooth 55 is interposed between cross member 59 and pin 61 of the lever 57 on the same side as tooth 55.

As shown in Figure 9, when piston 24 is moved forward from the withdrawn position to the forward position, each tooth 55 engages the corresponding pin 61, so that respective rocker arm 51 rotates about relative pin 53, thus detaching relative arm 54 from appendix 50 in opposition to respective spring 52. As piston 24 moves further forward, each tooth 55 releases corresponding pin 61, and each arm 54 is restored by respective spring 52 to its normal position contacting appendix 50.

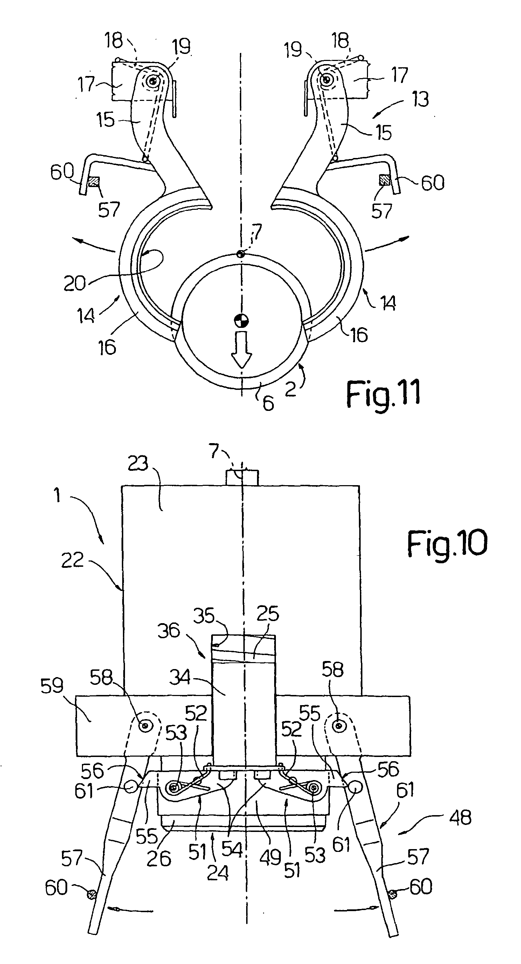

As piston 24 moves back from the forward position to the withdrawn position following percolation (Figure 10), each tooth 55 again engages corresponding pin 61. Since in this case, however, rotation of respective rocker arm 51 is prevented by relative arm 54 contacting appendix 50, tooth 55 pushes 61 to move it, along sloping surface 56 of tooth 55, transversely outwards of plate 49, thus rotating lever 57, integral with pin 61, about relative pin 58.

As shown in Figure 11, by virtue of the free end of each lever 57 engaging respective bracket 60, the parting of levers 57 simultaneously rotates jaws 14 in opposite directions about respective axes 19, thus opening seat 20, so that the used container 2 drops out.

## Claims

1. A percolator machine (1) for making a beverage from powdered material housed inside a container (2), the machine (1) having a horizontal first axis (7), and comprising a pressurized hot water dispenser unit (8) and a thrust unit (22) aligned with each other along the first axis (7), and seating means (13) interposed between the dispenser unit (8) and the thrust unit (22) to define a first seat (20) coaxial with the first axis (7) and for receiving a said container (2); the dispenser unit (8) comprising a pressurized hot water sprinkler (10); the thrust unit (22) comprising a fixed member (23), and a movable output member (24) facing the sprinkler (10) and movable along the first axis (7) to grip in fluidtight manner against the sprinkler (10) a container (2) housed, in use, inside said first seat (20); and the seating means (13) comprising a gripper device (13), in turn comprising two jaws (14) mounted to oscillate, about respective second axes (19) located above.the first axis (7) and parallel to each other and to the first axis (7), to and from a closed position, in which the two jaws (14) define said first seat (20), and a second seat (21) for a further container (2); said second seat (21) being open at the top, and being located between said second axes (19) and above the first seat (20);
the machine being **characterized by** further comprising automatic unloading means (48) for automatically unloading said container (2) from said first seat (20); said automatic unloading means (48) being carried by said movable output member (24), and cooperating with said jaws (14) to rotate the jaws (14), in opposite directions about respective said second axes (19), away from the closed position, as the movable output member (24) moves along said first axis (7) and away from said sprinkler (10).

2. A machine as claimed in Claim 1, wherein said automatic unloading means (48) comprise, for each said jaw (14), a bracket (60) carried by said jaw (14); a lever (57) hinged at one end to said fixed member (23) .to rotate, with respect to the fixed member (23), about a respective third axis (58) crosswise to the first axis (7) and to the second axes (19), said lever (57) being substantially parallel to said first axis (7) and engaging said bracket (60) in sliding manner; and cam means (51) carried by the movable output member (24), and which engage and rotate the lever (57) about the respective third axis (58) as the movable output member (24) moves along said first axis (7) and away from said sprinkler (10).

3. A machine as claimed in Claim 1 or 2, wherein said thrust unit (22) is a hydraulic thrust unit.

4. A machine as claimed in one of the foregoing Claims, and comprising an outflow conduit (30) for said beverage; the outflow conduit (30) being carried by said movable output member (24).

5. A machine as claimed in one of the foregoing Claims, wherein said sprinkler (10) and said jaws (14) are fixed transversely in a direction parallel to said second axes (19).

6. A machine as claimed in one of Claims 1 to 4, wherein said first seat (20) is a truncated-cone-shaped seat for receiving a sealed container (2) defined by a cup-shaped body having a truncated-cone-shaped lateral wall (37) closed at one end by an end wall (38), and at the other end by a sealing wall (39); piercing means (42, 46) being provided to penetrate a said sealed container (2) housed, in use, inside said first seat (20).

7. A machine as claimed in Claim 6, wherein said piercing means (42, 46) comprise a first piercing device (42) having needles (43) and carried by said dispenser unit (8) to pierce said sealing wall (39).

8. A machine as claimed in Claim 6 or 7, wherein said piercing means (42, 46) comprise a second piercing device (46) having needles (47) and carried by said movable output member (24) to pierce said end wall (38).

9. A machine as claimed in Claim 7 or 8, wherein the sprinkler (10) is moved along said first axis (7), by said movable output member (24) and in opposition to elastic means (44), from a normal extracted position covering the needles (43) of the first piercing device (42), to a withdrawn position in which the needles. (43) of said first piercing device (42) extend through the sprinkler (10) towards said movable output member (24).

10. A machine as claimed in Claim 9, wherein said jaws (14) are movable transversely in a direction parallel to said first axis (7).

11. A machine as claimed in one of the foregoing Claims, and comprising locking means (26) for locking said jaws (14) in said closed position.

12. A machine as claimed in Claim 11, wherein said locking means (26) are carried by said movable output member (24).

13. A machine as claimed in Claim 11 or 12, wherein said locking means (26) comprise an end portion (26) of said movable output member (24); said end portion (26) having a cavity (31) facing said gripper device (13) and for receiving a portion (33) of said jaws (14) in said closed position.

14. A machine as claimed in Claim 13, wherein said cavity (31) is bounded laterally by a truncated-cone-shaped surface (32) coaxial with the first axis (7) and tapering towards the thrust unit (22); said portion (33) of said jaws (14) being truncated-cone-shaped, coaxial with the first axis (7) and tapering towards the thrust unit (22), and engaging said truncated-cone-shaped surface (32).

15. A machine as claimed in one of the foregoing Claims, and comprising guide means (36) interposed between said movable output member (24) and said fixed member (23) to guide the movable output member (24) in angularly fixed manner along said first axis (7).

16. A machine as claimed in Claim 15, wherein said guide means (36) comprise a slot (35) formed, parallel to said first axis (7), along said fixed member (23); and a shoe (34) extending from said movable output member (24) and engaged in sliding manner inside said slot (35) .

## Patentansprüche

1. Kaffemaschine (1) zur Zubereitung eines Getränks aus pulvrigem in einem Behälter (2) untergebrachten Material, wobei die Maschine (1) eine horizontale erste Achse (7) aufweist, und eine Abgabeeinheit (8) für unter Druck befindliches Heißwasser und eine Drückeinheit (22) umfasst, die zueinander längs der ersten Achse (7) ausgerichtet sind, und ein zwischen der Abgabeeinheit (8) und der Drückeinheit (22) dazwischenliegendes Aufnahmemittel (13), um eine erste Aufnahme (20), die zu der ersten Achse (7) koaxial ist, zu definieren und zum Aufnehmen eines der Behälters (2); wobei die Abgabeeinheit (8) einen Sprinkler (10) für unter Druck befindliches Heißwasser umfasst; wobei die Drückeinheit (22) ein festes Element (23) umfasst, und ein bewegliches Ausgabeelement (24), das dem Sprinkler (10) gegenüberliegt und längs der ersten Achse (7) beweglich ist, um in fluiddichter Weise gegenüber dem Sprinkler (10) einen Behälter (2) zu greifen, der bei Verwendung im Inneren der ersten Aufnahme (20) aufgenommen ist; und wobei das Aufnahmemittel (13), das eine Greifervorrichtung umfasst, die wiederum zwei Backen (14) umfasst, die montiert sind, um hin- und herbeweglich um jeweilige zweite Achsen (19) zu sein, die über der ersten Achse (7) und parallel zueinander und zu der ersten Achse (7) angeordnet sind, in eine und aus einer geschlossene(n) Stellung, in der die beiden Backen (14) die erste Aufnahme (20) definieren, und eine zweite Aufnahme (21) für einen weiteren Behälter (2); wobei die zweite Aufnahme (21) oben offen ist und zwischen den zweiten Achsen (19) und über der ersten Aufnahme (20) angeordnet ist, wobei die Maschine (1) **dadurch gekennzeichnet ist, dass**
sie ferner umfasst: automatische Entlademittel (48) zum automatischen Entladen des Behälters (2) aus der ersten Aufnahme (20); wobei die automatischen Entlademittel (48) von den beweglichen Ausgabeelementen (24) getragen werden, und zusammen mit den Backen (14) arbeiten, um die Backen (14) in entgegengesetzte Richtungen um die jeweiligen zweiten Achsen (19), weg von der geschlossenen Stellung, zu drehen, wenn sich das bewegliche Ausgabeelement (24) längs der ersten Achse (7), und von dem Sprinkler (10) weg, bewegt.

2. Maschine nach Anspruch 1, wobei die automatischen Entlademittel (48) für jede Backe (14) eine von der Backe (14) getragene Klammer (60) umfassen; einen Hebel (57), der an einem Ende des festen Elements (23) angelenkt ist, und sich hinsichtlich des festen Elements (23) um eine jeweilige dritte Achse (58) kreuzweise zu der ersten Achse (7) und zu der zweiten Achse (19) zu drehen, wobei der Hebel (57) im Wesentlichen parallel zu der ersten Achse (7) ist und die Klammer (60) in einer gleitenden Weise angreift; und Nockenmittel (51), die von dem beweglichen Ausgabeelement (24) getragen werden und die an dem Hebel (57) angreifen und diesen um die jeweilige dritte Achse (58) drehen, wenn sich das bewegliche Ausgabeelement (24) längs der ersten Achse (7), und von dem Sprinkler (10) weg, bewegt.

3. Maschine nach Anspruch 1 oder 2, wobei die Drückeinheit (22) eine hydraulische Drückeinheit ist.

4. Maschine nach einem der vorhergehenden Ansprüche, und eine Abflussleitung (30) für das Getränk umfassend; wobei die Abflussleitung (30) von dem beweglichen Ausgabeelement (24) getragen ist.

5. Maschine nach einem der vorhergehenden Ansprüche, wobei der Sprinkler (10) und die Backen (14) quer in einer parallelen Richtung zu der zweiten Achse (19) befestigt sind.

6. Maschine nach einem der Ansprüche 1 bis 4, wobei die erste Aufnahme (20) eine kegelstumpfförmige Aufnahme zum Aufnehmen eines abgedichteten Behälters (2) ist, der durch einen becherförmigen Körper mit einer an einem Ende durch eine Endwand (38) und an dem anderen Ende durch eine Abdichtwand (39) abgeschlossene kegelstumpfförmige Seitenwand (37) definiert ist; und Durchstechmittel (42, 46) vorgesehen sind, einen bei Verwendung im Inneren der ersten Aufnahme (20) angeordneten abgedichteten Behälter (2) zu durchdringen.

7. Maschine nach Anspruch 6, wobei die Durchstechmittel (42, 46) eine Durchstechvorrichtung (42) umfassen, die Nadeln (43) hat und von der Abgabeeinheit (8) getragen wird, um die Abdichtwand (39) zu durchstechen.

8. Maschine nach Anspruch 6 oder 7, wobei die Durchstechmittel (42, 46) eine zweite Durchstechvorrichtung (46) umfassen, die Nadeln (47) hat und von dem beweglichen Ausgabeelement (24) getragen wird, um die Endwand (38) zu durchstechen.

9. Maschine nach Anspruch 7 oder 8, wobei der Sprinkler (10) längs der ersten Achse (7) durch das bewegliche Ausgabeelement (24) und entgegengesetzt zu elastischen Mitteln (44) bewegt wird, von einer normal extrahierten Stellung, in der die Nadeln (43) der ersten Durchstechvorrichtung (42) abdeckt sind, in eine zurückgezogene Stellung, in der sich die Nadeln (43) der ersten Durchstechvorrichtung (42) durch den Sprinkler (10) hindurch zu dem beweglichen Ausgabeelement (24) hin erstrecken.

10. Maschine nach Anspruch 9, wobei die Backen (14) quer in einer zu der ersten Achse (7) parallelen Richtung beweglich sind.

11. Maschine nach einem der vorhergehenden Ansprüche, und Verriegelungsmittel (26) zum Verriegeln der Backen (14) in der geschlossenen Stellung umfassend.

12. Maschine nach Anspruch 11, wobei die Verriegelungsmittel (26) von dem beweglichen Ausgabeelement (24) getragen werden.

13. Maschine nach Anspruch 11 oder 12, wobei die Verriegelungsmittel (26) einen Endabschnitt (26) des beweglichen Ausgabelements (24) umfassen; und wobei der Endabschnitt (26) eine Vertiefung (31) aufweist, die zu der Greifervorrichtung (13) weist, zur Aufnahme eines Abschnitts (33) der Backen (14) in der geschlossenen Stellung.

14. Maschine nach Anspruch 13, wobei die Vertiefung (31) seitlich durch eine kegelstumpfförmige Oberfläche (32) begrenzt ist, die zu der ersten Achse (7) koaxial ist und sich zu der Drückeinheit (22) hin verjüngt; und wobei der Abschnitt (33) der Backen (14) kegelstumpfförmig, koaxial zu der ersten Achse (7) ist und sich zu der Drückeinheit (22) hin verjüngt und an der kegelstumpfförmigen Oberfläche (32) angreift.

15. Maschine nach einem der vorhergehenden Ansprüche, und Führungsmittel (36) umfassend, die zwischen dem beweglichen Ausgabeelement (24) und dem festen Element (23) dazwischenliegen, um das bewegliche Ausgabeelement (24) in winkelmäßiger fester Weise längs der ersten Achse (7) zu führen.

16. Maschine nach Anspruch 15, wobei die Führungsmittel (36) einen Schlitz (35) umfassen, der parallel zu der ersten Achse (7), längs des festen Elements (23) ausgebildet ist; und einen Schuh (34), der sich von dem beweglichen Ausgabelement (24) erstreckt und in gleitender Weise in den Schlitz (35) greift.

## Revendications

1. Machine de percolation (1) destinée à faire une boisson à partir d'une matière en poudre logée à l'intérieur d'un récipient (2), la machine (1) présentant un premier axe horizontal (7), et comprenant une unité de distribution d'eau chaude sous pression (8) et une unité de poussée (22) alignées l'une sur l'autre le long du premier axe (7), et un moyen de réception (13) interposé entre l'unité de distribution (8) et l'unité de poussée (22) pour définir un premier emplacement (20) coaxial avec le premier axe (7) et pour recevoir un dit récipient (2) ; l'unité de distribution (8) comprenant un pulvérisateur d'eau chaude sous pression (10) ; l'unité de poussée (22) comprenant un élément fixe (23), et un élément de sortie mobile (24) opposé au pulvérisateur (10) et mobile le long du premier axe (7) pour saisir de manière étanche au fluide contre le pulvérisateur (10) un récipient (2) logé, en cours d'utilisation, à l'intérieur dudit premier emplacement (20) ; et le moyen de réception (13) comprenant un dispositif de saisie (13), comprenant quant à lui deux mâchoires (14) montées pour osciller, autour de seconds axes respectifs (19) situés au-dessus du premier axe (7) et parallèles l'un à l'autre et au premier axe (7), vers et loin d'une position fermée, dans laquelle les deux mâchoires (14) définissent ledit premier emplacement (20), et un second emplacement (21) pour un autre récipient (2) ; ledit second récipient (21) étant ouvert sur le dessus, et étant situé entre lesdits seconds axes (19) et au-dessus du premier emplacement (20) ;
la machine étant **caractérisée en ce qu'**elle comprend en outre un moyen de déchargement automatique (48) pour décharger automatiquement ledit récipient (2) dudit premier emplacement (20) ; ledit moyen de déchargement automatique (48) étant porté par ledit élément de sortie mobile (24), et coopérant avec lesdites mâchoires (14) pour faire tourner les mâchoires (14), dans des directions opposées autour desdits seconds axes respectifs (19), loin de la position fermée, lorsque l'élément de sortie mobile (24) se déplace le long dudit premier axe (7) et s'éloigne dudit pulvérisateur (10).

2. Machine selon la revendication 1, dans laquelle ledit moyen de déchargement automatique (48) comprend, pour chaque dite mâchoire (14), un support (60) porté par ladite mâchoire (14) ; un levier (57) articulé au niveau d'une extrémité sur ledit élément fixe (23) pour tourner, par rapport à l'élément fixe (23), autour d'un troisième axe respectif (58) transversal au premier axe (7) et aux seconds axes (19), ledit levier (57) étant sensiblement parallèle audit premier axe (7) et engageant ledit support (60) d'une manière coulissante ; et un moyen de came (51) porté par l'élément de sortie mobile (24), et qui engage et fait tourner le levier (57) autour du troisième axe respectif (58) lorsque l'élément de sortie mobile (24) se déplace le long dudit premier axe (7) et loin dudit pulvérisateur (10).

3. Machine selon la revendication 1 ou 2, dans laquelle ladite unité de poussée (22) est une unité de poussée hydraulique.

4. Machine selon l'une des revendications précitées, et comprenant un conduit d'écoulement (30) pour ladite boisson ; le conduit d'écoulement (30) étant porté par ledit élément de sortie mobile (24).

5. Machine selon l'une des revendications précitées, dans laquelle ledit pulvérisateur (10) et lesdites mâchoires (14) sont fixés de manière transversale dans une direction parallèle auxdits seconds axes (19).

6. Machine selon l'une des revendications 1 à 4, dans laquelle ledit premier emplacement (20) est un emplacement en forme de cône tronqué pour recevoir un récipient scellé (2) défini par un corps en forme de tasse ayant une paroi latérale en forme de cône tronqué (37) fermée à une extrémité par une paroi d'extrémité (38), et à l'autre extrémité par une paroi d'étanchéité (39) ; des moyens de perçage (42, 46) étant prévus pour pénétrer un dit récipient scellé (2) logé, en cours d'utilisation, à l'intérieur dudit premier emplacement (20).

7. Machine selon la revendication 6, dans laquelle lesdits moyens de perçage (42, 46) comprennent un premier dispositif de perçage (42) comportant des aiguilles (43) et porté par ladite unité de distribution (8) pour percer ladite paroi d'étanchéité (39) .

8. Machine selon la revendication 6 ou 7, dans laquelle lesdits moyens de perçage (42, 46) comprennent un second dispositif de perçage (46) comportant des aiguilles (47) et porté par ledit élément de sortie mobile (24) pour percer ladite paroi d'extrémité (38).

9. Machine selon la revendication 7 ou 8, dans laquelle le pulvérisateur (10) est déplacé le long dudit premier axe (7), par ledit élément de sortie mobile (24) et en opposition à un moyen élastique (44), depuis une position extraite normale couvrant les aiguilles (43) du premier dispositif de perçage (42), jusqu'à une position retirée dans laquelle les aiguilles (43) dudit premier dispositif de perçage (42) s'étendent à travers le pulvérisateur (10) en direction dudit élément de sortie mobile (24).

10. Machine selon la revendication 9, dans laquelle lesdites mâchoires (14) sont mobiles de manière transversale dans une direction parallèle audit premier axe (7).

11. Machine selon l'une des revendications précitées, et comprenant un moyen de verrouillage (26) destiné à verrouiller lesdites mâchoires (14) dans ladite position fermée.

12. Machine selon la revendication 11, dans laquelle ledit moyen de verrouillage (26) est porté par ledit élément de sortie mobile (24).

13. Machine selon la revendication 11 ou 12, dans laquelle ledit moyen de verrouillage (26) comprend une partie d'extrémité (26) dudit élément de sortie mobile (24) ; ladite partie d'extrémité (26) comportant une cavité (31) opposée audit dispositif de saisie (13) et étant destinée à recevoir une partie (33) desdites mâchoires (14) dans ladite position fermée.

14. Machine selon la revendication 13, dans laquelle ladite cavité (31) est délimitée latéralement par une surface en forme de cône tronqué (32) coaxiale avec le premier axe (7) et se resserrant vers l'unité de poussée (22) ; ladite partie (33) desdites mâchoires (14) étant en forme de cône tronqué, coaxiale avec le premier axe (7) et se resserrant vers l'unité de poussée (22), et engageant ladite surface en forme de cône tronqué (32).

15. Machine selon l'une des revendications précitées, et comprenant un moyen de guidage (36) interposé entre ledit élément de sortie mobile (24) et ledit élément fixe (23) pour guider l'élément de sortie mobile (24) d'une manière angulairement fixe le long dudit premier axe (7).

16. Machine selon la revendication 15, dans laquelle ledit moyen de guidage (36) comprend une fente (35) formée, parallèle audit premier axe (7), le long dudit élément fixe (23) ; et un sabot (34) s'étendant depuis ledit élément de sortie mobile (24) et engagé d'une manière coulissante à l'intérieur de ladite fente (35).
